(19) **Europäisches Patentamt / European Patent Office / Office européen des brevets**

(11) **EP 3 034 411 B1**

(12) **FASCICULE DE BREVET EUROPEEN**

(45) Date de publication et mention de la délivrance du brevet:
**29.03.2017 Bulletin 2017/13**

(51) Int Cl.:
***B64G 1/00*** *(2006.01)*     ***G01S 19/02*** *(2010.01)*
*B64G 1/40* *(2006.01)*

(21) Numéro de dépôt: **15199460.5**

(22) Date de dépôt: **11.12.2015**

(54) **PROCEDE DE GUIDAGE POUR LA MISE A POSTE D'UN SATELLITE**

STEUERUNGSVERFAHREN ZUR POSITIONIERUNG EINES SATELLITEN

METHOD FOR GUIDING THE STATIONING OF A SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2014 FR 1402879**

(43) Date de publication de la demande:
**22.06.2016 Bulletin 2016/25**

(73) Titulaire: **THALES**
**92400 Courbevoie (FR)**

(72) Inventeurs:
• **AMALRIC, Joël**
**06810 Auribeau sur Siagne (FR)**
• **DARGENT, Thierry**
**06810 Auribeau sur Siagne (FR)**
• **LE BRIS, Christophe**
**06370 Mouans-Sartoux (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A1- 2 998 875    US-B1- 7 246 775**

**Description**

La présente invention concerne la mise à poste ou le transfert d'orbite pour des satellites dotés de systèmes propulsifs utilisant des moteurs de faible poussée et dont la mise à poste ou le transfert d'orbite est réalisé par un nombre de révolutions d'orbite important. Ces moteurs de faible puissance sont par exemple, des moteurs dont l'ionisation du gaz propulseur est effectuée de manière électrique à poussée faible en utilisant typiquement une technologie de tuyère à ions à grille, ou bien à effet Hall. Ces moteurs sont aussi connus, dans l'état de la technique, sous le nom de moteurs électriques. Les moteurs dont l'ionisation du gaz propulseur est effectuée de manière chimique sont eux connus, dans l'état de la technique, sous le nom de moteurs chimiques ; ils sont généralement destinés à délivrer une forte poussée mais peuvent également être utilisés pour délivrer une poussée faible ou moyenne.

Ces moteurs à poussée faible permettent de limiter la masse de carburant nécessaire pour effectuer l'opération de transfert d'orbite du satellite. Cependant, ces moteurs étant de faible puissance, ils présentent comme inconvénient un allongement de un à deux ordres de grandeur du temps de mise en poste ou de transfert d'orbite par rapport à l'utilisation de moteurs chimiques à forte poussée. La durée nominale du transfert orbital à poussée faible peut en effet varier de quelques semaines à quelques mois.

Du fait de cette faible puissance et de l'allongement du temps de transfert ou de mise en poste, les méthodes de commande, qui déterminent la loi de poussée du moteur (direction et amplitude en fonction du temps), utilisées pour les moteurs chimiques à forte poussée, ne sont pas applicables pour les moteurs à faible poussée.

Une méthode de commande de moteurs électriques est décrite dans la publication « Boeing Low-Thrust Geosynchronous Transfer Mission Expérience », pour le transfert orbital d'une orbite d'injection elliptique délivrée par un véhicule de lancement, vers une orbite cible géostationnaire. Elle consiste au cours d'une première phase à appliquer une poussée continue suivant le vecteur vitesse instantanée du satellite jusqu'à ce que celui-ci atteigne une orbite elliptique de même période que celle de l'orbite cible. Une seconde phase est consacrée à la transformation de cette orbite elliptique en une orbite circulaire en utilisant une loi d'orientation de poussée perpendiculaire à la ligne apogée-périgée dans le plan de l'orbite. Cette méthode présente quelques inconvénients :

- elle est sous-optimale dans la mesure où le temps de transfert est trop long et la consommation de carburant électrique (Xenon, Argon, ...) trop importante ;
- elle ne permet pas d'atteindre l'orbite cible circulaire telle que l'orbite opérationnelle avec une précision suffisante ;
- elle est limitée à un transfert de type GTO-GEO, c'est-à-dire à un transfert d'une orbite elliptique vers une orbite circulaire de période 24h. En outre on peut aussi viser un transfert d'une orbite non elliptique vers une orbite non circulaire ou plus généralement un transfert quelque soit l'orbite de départ et d'arrivée du satellite.

Ces inconvénients sont surmontés par le procédé de mise à poste décrit dans la demande de brevet FR 2998875. Il peut être réalisé à bord du satellite (en particulier ayant des besoins en ressources de mémoire et de calcul compatibles avec les performances d'un satellite). Ce procédé permet de déterminer la loi de commande optimale quelque soit l'orbite de départ et d'arrivée du satellite, tout en minimisant le temps de trajet ou la consommation de carburant durant la mise en poste ou le transfert d'orbite du satellite. Les ressources, en termes de quantité de mémoire disponible et de puissance de calcul nécessaires au fonctionnement du procédé, sont faibles par rapport aux ressources informatiques des satellites actuels. La méthode de commande est robuste aux interruptions de mission, telles que l'interruption du pilotage pour maintenance, des pannes, etc.. La méthode de commande est capable de corriger automatiquement en boucle fermée la loi de commande optimale en fonction de l'écart à la trajectoire nominale, avec des calculs simples et sans re-programmation depuis le sol. Enfin, cette solution permet la réalisation d'un transfert autonome d'orbite et est adapté à l'utilisation de moteurs électriques.

Mais ce procédé qui est basé notamment sur la connaissance à bord du satellite et en temps réel, de la position du satellite, nécessite que celui-ci soit équipé d'un récepteur de type GNSS. Un tel récepteur est difficile à concevoir car l'acquisition de l'information est réalisée sur les lobes secondaires de l'antenne du récepteur avec donc un faible RSB. Et un tel récepteur n'est pas adapté pour des orbites ou des portions d'orbite dont l'altitude est supérieure à celle de la constellation des satellites GNSS qui est d'environ 20 000 km. Par ailleurs, ce procédé particulièrement bien adapté à la mise à poste d'un satellite en auto-rotation autour du vecteur poussée, pose un problème de mise en oeuvre lorsque le satellite n'est pas dans cette configuration.

Le but de l'invention est de pallier ces inconvénients.

Le procédé de guidage selon l'invention est basé sur une représentation unique issue de la théorie du contrôle optimal (pas de changement de paradigme). Plus précisément l'invention a pour objet un procédé de guidage pour la mise à poste d'un satellite à poussée faible équipé de moyens de communication avec une station sol, caractérisé en ce qu'il comporte les étapes suivantes réalisées pendant un cycle courant prédéfini :

A) déterminer au sol pour un cycle prédéterminé, une loi d'orientation du vecteur poussée du satellite, et un historique de variables d'état et de variables d'état adjoint du satellite pour le transfert d'une orbite de départ vers une orbite cible prédéterminée en utilisant la théorie du contrôle optimal,

B) à partir de la loi d'orientation du vecteur poussée du satellite, et de l'historique de variables d'état et de variables d'état adjoint du satellite, déterminer au sol pour ladite période de cycle, une loi d'évolution de la rotation du satellite autour du vecteur poussée dans un repère inertiel de référence,

C) représenter selon un format prédéterminé l'évolution des variables d'état et d'état adjoint pour obtenir des premiers paramètres,

D) représenter selon un format prédéterminé une loi d'évolution de la rotation pour obtenir des seconds paramètres,

E) concaténer les premiers et seconds paramètres pour obtenir un plan de guidage du satellite,

F) télécharger à bord du satellite le plan de guidage du satellite,

G) pendant le cycle courant, itérer les sous-étapes suivantes selon une période prédéfinie inférieure à la durée du cycle de guidage :

- g1) reconstruire à bord du satellite une consigne de guidage du satellite,
- g2) exécuter à bord du satellite la consigne de guidage en appliquant une boucle fermée de contrôle,

H) mesurer au sol la trajectoire orbitale réelle du satellite,

I) réitérer les étapes A) à H) périodiquement de cycle en cycle, avec la trajectoire mesurée en fin de cycle précédent comme orbite de départ du cycle suivant, jusqu'à atteindre l'orbite cible.

Cette approche est générique en ce qu'elle peut s'appliquer à tout type de transfert orbital à poussée faible.

La qualité de la commande de guidage bord obtenue par l'approche proposée s'avère meilleure que celle obtenue par la solution de l'état de l'art (réduction des biais et des bruits par construction) :

- La boucle de guidage en boucle ouverte à bord est refermée par le sol sur un horizon de temps périodique en utilisant des moyens sol standard pour la mesure et le filtrage de l'orbite.
- Le procédé selon l'invention permet de reconstruire simplement à bord l'attitude 3-axes satellite de guidage (par exemple représentée par un quaternion de norme unité), et pas seulement la loi d'orientation du vecteur poussée.
- En outre, cette généralisation de la commande satellite se fait sans approximation supplémentaire (pas d'ajustement de courbe : à bord, le processus de reconstruction de l'attitude n'introduit pas d'erreur).

Le procédé selon l'invention propose une méthode efficace et robuste pouvant même supporter des interruptions non programmées de la mission, pour implémenter à bord d'un satellite la loi de contrôle optimale minimisant le temps de trajet ou la consommation de carburant pour un temps de trajet nominal donné. Elle est efficace dans le sens où un recalage est fait par le sol en début de chaque cycle en considérant l'orbite mesurée, ainsi qu'une ré-optimisation de trajectoire à terminaison qui induit une performance de la loi implémentée proche de celle de la loi théorique.

Le coût d'implémentation en termes de mémoire et de calcul est faible au regard des ressources informatiques des satellites actuels.

En outre, aucun moyen de navigation (récepteur et antenne GNSS) n'est requis à bord, ce qui diminue la complexité et le cout de développement du satellite.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement un organigramme des différentes étapes du procédé de guidage selon l'invention,

les figures 2 illustrent les différences pour générer le plan de guidage, entre un procédé de l'art antérieur (fig 2a) et celui selon l'invention (fig 2b).

D'une figure à l'autre, les mêmes éléments sont repérés par les mêmes références.

Le procédé selon l'invention présuppose que l'on planifie au sol la trajectoire de guidage avant le début du transfert à poussée faible. Le premier plan de guidage est alors téléchargé à bord du satellite pour application sur un horizon de guidage limité (par exemple 7 jours). Pendant le cycle courant du transfert orbital, le procédé permet de calculer simplement la consigne de guidage à bord et de l'exécuter en boucle ouverte. Le recalage de l'orbite est fait au sol. Puis une nouvelle planification au sol de la trajectoire de guidage est réalisée à partir de l'orbite mesurée jusqu'à l'orbite cible. Le nouveau plan de guidage est alors téléchargé au satellite. Le processus s'arrête après exécution du dernier cycle de guidage.

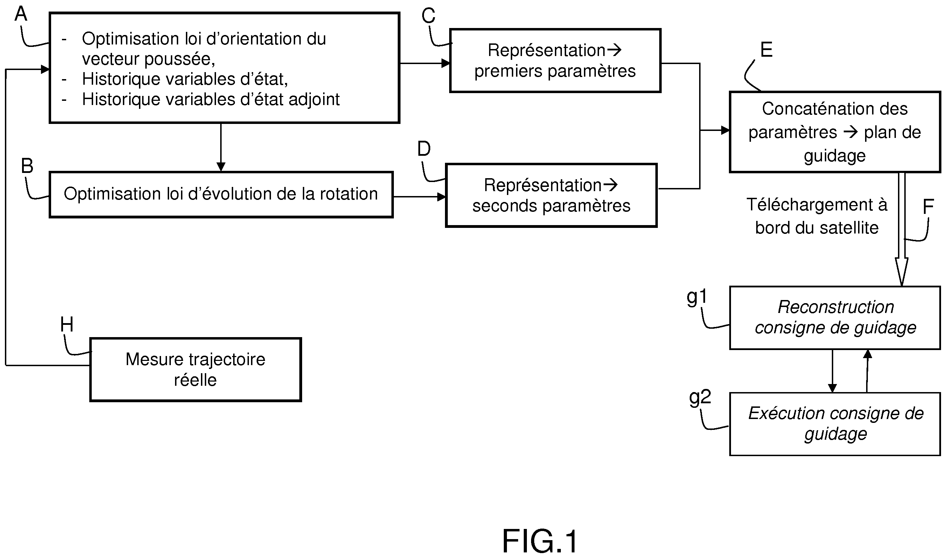

Le procédé de guidage selon l'invention est ainsi basé sur une boucle itérative de guidage bord-sol (pour un cycle courant) qui est résumé par le graphe de la figure 1 dans lequel les étapes réalisées au sol sont indiquées en caractères droits, celles réalisées à bord étant indiquées en italiques.

Il comporte les étapes suivantes :

A) Déterminer au sol pour un cycle de guidage prédéterminé, une loi d'orientation du vecteur poussée du satellite, et un historique (c'est-à-dire l'évolution temporelle) des variables d'état et des variables d'état adjoint du satellite, pour le transfert d'une orbite de départ vers une orbite cible prédéterminée en utilisant la théorie du contrôle optimal. On rappelle qu'un vecteur d'état permet de caractériser un système dynamique sous forme vectorielle en utilisant des variables d'état. Les variables d'état à un instant donné sont des grandeurs qui définissent complètement l'état du système dynamique à cet instant. Ces grandeurs ont le plus souvent une signification physique. La connaissance du vecteur d'état à un instant t quelconque permet de connaître l'état sur un intervalle [t,t + T], par intégration par rapport au temps entre t et t + T de la dynamique du vecteur d'état. T est une variable arbitraire représentant l'horizon de temps de prédiction. Le nombre de variables d'état, désigné par la lettre n, est la dimension du système.

B) A partir de la loi d'orientation du vecteur poussée du satellite, et des historiques de variables d'état et de variables d'état adjoint du satellite, représentés dans un repère inertiel de référence, déterminer au sol pour le cycle de guidage courant, une loi d'évolution de la rotation du satellite autour du vecteur poussée.

C) Représenter au sol selon un format prédéterminé l'évolution temporelle des variables d'état et d'état adjoint pour obtenir des premiers paramètres.

D) Représenter au sol selon un format prédéterminé la loi d'évolution de la rotation pour obtenir des seconds paramètres.

E) Concaténer au sol les premiers et seconds paramètres pour obtenir un plan de guidage du satellite.

F) Télécharger à bord du satellite ce plan de guidage.

G) Pendant le cycle courant, itérer les étapes suivantes selon une période prédéfinie très inférieure à la durée du cycle de guidage, par exemple toutes les minutes pour un cycle de guidage d'une semaine :

- g1) reconstruire à bord du satellite une consigne de guidage du satellite,
- g2) exécuter à bord du satellite la consigne de guidage en appliquant de manière classique une boucle fermée de contrôle.

H) Pendant le cycle de guidage courant, mesurer au sol la trajectoire orbitale réelle du satellite selon une période prédéfinie, par exemple toutes les 4 heures, de manière à obtenir en fin de cycle une trajectoire orbitale réelle.

I) Réitérer les étapes précédentes sur le cycle suivant, avec la trajectoire réelle mesurée en fin de cycle de guidage courant comme orbite de départ, jusqu'à atteindre l'orbite cible.

On va à présent détailler ces étapes.

Préalablement, une orbite de départ est définie ainsi qu'une orbite cible. L'orbite de départ est par exemple l'orbite d'injection délivrée par le véhicule de lancement, ou bien une orbite intermédiaire de transfert si la première partie du transfert est réalisée classiquement par un moteur chimique de forte poussée ; l'orbite cible est par exemple l'orbite opérationnelle de la mission satellite (par exemple l'orbite géostationnaire), ou bien une orbite proche de celle-ci.

De même le cycle de guidage aussi désigné horizon de guidage est déterminé au préalable, expérimentalement ou par simulation au sol en faisant un compromis entre temps de cycle (de préférence long) et consommation de carburant (de préférence faible).

L'étape A) pour déterminer :

- la loi d'orientation du vecteur poussée du satellite,
- un historique de variables d'état du satellite, et
- un historique de variables d'état adjoint du satellite,

peut utiliser différents modèles de l'évolution spatiale du satellite, tels que décrits dans la demande de brevet FR 2998875.

Un premier modèle utilise une représentation cartésienne. Une représentation cartésienne est une représentation en position et en vitesse. Ce premier modèle utilise les équations suivantes :

$$\frac{d^2\vec{r}}{dt^2} = -\mu\frac{\vec{r}}{r^3} + \frac{F}{m}\vec{\beta} + \frac{\vec{F}_{perturbatrice}}{m}$$

$$\frac{dm}{dt} = -\frac{F}{g_0 \times I_{sp}}$$

Dans ces équations les différentes variables représentent les éléments suivants :

$\vec{r}$ rayon vecteur du satellite par rapport au centre Terre en mètres,
$\vec{\beta}$ vecteur des cosinus directeurs de la poussée,
$F$ poussée du moteur ($F \geq 0$) en Newtons,
$I_{sp}$ impulsion spécifique du moteur en secondes,
m masse du satellite en kilogrammes,
$\mu$ Constante gravitationnelle 3,986005 E+14 m3/s2 pour la Terre,
$g_0$ Accélération terrestre normalisée 9.80665 m/s2,
$\vec{F}_{perturbatrice}$ ensemble des forces perturbatrices affectant la trajectoire du satellite en Newtons.

Les forces perturbatrices agissant sur le satellite interviennent au second ordre dans les modifications de la trajectoire du satellite. Dans un premier temps, leurs actions sont donc négligées et traitées comme des perturbations par le contrôle en boucle fermée.

En notant la vitesse $\frac{d\vec{r}}{dt} = \vec{v}$ les équations de la dynamique du satellite peuvent s'écrire sous la forme d'un système d'équations différentielles non linéaires du 1 er ordre :

$$\begin{cases} \dfrac{d\vec{r}}{dt} = \vec{v} \\ \dfrac{d\vec{v}}{dt} = -\mu\dfrac{\vec{r}}{r^3} + \dfrac{F}{m}\vec{\beta} + \dfrac{\vec{F}_{perturbatrice}}{m} \\ \dfrac{dm}{dt} = -\dfrac{F}{g_0 \times I_{sp}} \end{cases}$$

On note $\begin{bmatrix} \vec{r} \\ \vec{v} \\ m \end{bmatrix}$ le vecteur d'état du système qui permet d'avoir une représentation cartésienne de la dynamique du satellite.

Un deuxième modèle utilise une représentation képlérienne. Dans ce modèle, l'équation de la dynamique du satellite est transformée pour exprimer le mouvement du satellite en termes d'éléments de type képlérien. Ces éléments képlériens sont le demi-grand axe $a$, excentricité $e$, la longitude du périgée $\omega$, la longitude du noeud ascendant $\Omega$ et l'anomalie vraie $\nu$. Cette modélisation offre l'avantage d'être directement interprétable par l'homme du métier. En effet, elle exprime directement les éléments géométriques de l'orbite du satellite. De plus, cinq des six paramètres sont des intégrales premières du mouvement, ce qui permet une implémentation numérique simple. Le vecteur d'état dans ce jeu de coordonnée est

$$x = [\ a,\ e,\ i,\ \omega,\ \Omega,\ v,\ m].$$

Un troisième modèle est le modèle équinoxial. Ce modèle utilise des coordonnées dont les paramètres sont $p$, $e_x$, $e_y$, $h_x$, $h_y$ et $l$ :

$p$ est le paramètre de la conique, $[e_x, e_y]$ représente le vecteur excentricité et $[h_x, h_y]$ le vecteur inclinaison. Le vecteur d'état dans ce jeu de coordonnée est $x = [p, e_x, e_y, h_x, h_y, l, m]$.

Contrairement au modèle képlérien, la dynamique d'état du modèle équinoxial ne présente pas de singularité, tant pour les orbites équatoriales ($i$ = 0°) que les orbites polaires ($i$ = 90°). De plus, la dynamique d'état est valable simultanément pour les orbites elliptiques et hyperboliques.

Les paramètres du modèle équinoxial sont exprimés à partir des paramètres képlériens par les équations suivantes :

$$p = a|1 - e^2| \quad \text{en mètres}$$

$$e_x = e \times \cos(\omega + \Omega)$$

$$e_y = e \times \sin(\omega + \Omega)$$

$$h_x = \tan\frac{i}{2}\cos(\Omega)$$

$$h_y = \tan\frac{i}{2}\sin(\Omega)$$

$$l = \omega + \Omega + v \quad \text{en radian}$$

Dans ces équations, les différents éléments représentent :

$a$     le demi-grand axe en mètre
$e$     l'excentricité
$i$     l'inclinaison en radian
$\Omega$     la longitude du noeud ascendant en radian
$\omega$     l'argument du périgée en radian
$v$     l'anomalie vraie en radian

En utilisant le modèle équinoxial les équations de la dynamique du satellite sont les équations suivantes :

$$\frac{dp}{dt} = 2\sqrt{\frac{p^3}{\mu}\frac{1}{Z}}S$$

$$\frac{de_x}{dt} = \sqrt{\frac{p}{\mu}\frac{1}{Z}}\left(Z \times \sin(l) \times Q + A \times S - e_y \times F \times W\right)$$

$$\frac{de_y}{dt} = \sqrt{\frac{p}{\mu}\frac{1}{Z}}\left(-Z \times \cos(l) \times Q + B \times S + e_x \times F \times W\right)$$

$$\frac{dh_x}{dt} = \frac{1}{2}\sqrt{\frac{p}{\mu}\frac{X}{Z}}\cos(l) \times W$$

$$\frac{dh_y}{dt} = \frac{1}{2}\sqrt{\frac{p}{\mu}\frac{X}{Z}}\sin(l) \times W$$

$$\frac{dl}{dt} = \sqrt{\frac{\mu}{p^3}}Z^2 + \sqrt{\frac{p}{\mu}\frac{1}{Z}} \times F \times W$$

$$\frac{dm}{dt} = -\frac{T}{g_0 \times I_{sp}}$$

Dans ces équations, les différents paramètres sans unités sont définis par :

$$Z = 1 + e_x\cos(l) + e_y\sin(l)$$

$$A = e_x + (1 + Z)\cos(l)$$

$$B = e_y + (1 + Z)\sin(l)$$

$$F = h_x\sin(l) - h_y\cos(l)$$

$$X = 1 + h_x{}^2 + h_y{}^2$$

et $Q$, $S$ et $W$ sont les composantes radiale, tangentielle et normale de l'accélération délivrée par le moteur et/ou les forces perturbatrices.

La dynamique du satellite évoluant lentement à cause de la faible poussée des moteurs, il est intéressant de regarder la dynamique en paramètres d'état moyen sur une orbite au lieu de s'occuper des paramètres d'état instantané comme dans les équations précédentes.

L'opération de moyennation s'effectue avec la formule suivante :

$$\bar{x} = \bar{f} = \frac{1}{T}\int_0^T f(x,u^*)dt = \frac{1}{T}\int_0^{2\pi} f(x,u^*)\frac{1}{\left(\frac{dl}{dt}\right)}dl$$

$$T = \int_0^{2\pi} \frac{1}{\left(\frac{dl}{dt}\right)}dl$$

où $f$ est la dynamique satellite fonction de l'état $x$ et du control $u^*$ et $T$ la période de l'orbite. La moyennation permet d'obtenir une représentation plus lisse des paramètres de l'orbite qui sont plus facilement représentables par des polynômes.

Un modèle de la dynamique du satellite ayant été choisi, on détermine à présent la trajectoire de référence, en fonction de l'orbite de départ, de l'orbite cible et des caractéristiques du satellite (masse totale, poussée totale et impulsion spécifique des moteurs à propulsion électrique utilisés en transfert). Cette détermination est réalisée en utilisant la théorie du contrôle optimal en appliquant le principe du maximum, sur le modèle choisi. Cette application du principe du maximum permet de calculer la trajectoire de référence optimale sur le cycle de guidage courant suivant le critère d'optimalité retenu : classiquement trajectoire en temps minimum ou trajectoire à durée fixée et en consommation de carburant minimum. Cette étape permet d'obtenir une trajectoire optimale fonction d'un temps t, dont les paramètres représentatifs sont $x_{ref}(t)$ et $\lambda_{ref}(t)$.

$x_{ref}(t)$ est le vecteur d'état de la dynamique satellite (par exemple $x_{ref}(t) = [p(t), e_x(t), e_y(t), h_x(t), h_y(t), l(t), m(t)]$)et, $\lambda_{ref}(t)$ sont les multiplicateurs de Lagrange associés au vecteur d'état adjoint du satellite en application du principe du minimum, (par exemple $\lambda_{ref}(t) = [\lambda_p(t), \lambda_{ex}(t), \lambda_{ey}(t), \lambda_{hx}(t), \lambda_{hy}(t), \lambda_l(t), \lambda_m(t)]$).

On détermine alors les paramètres de la loi de commande des moteurs du satellite, associée à la trajectoire optimale déterminée ci-dessus. Cette détermination est effectuée par résolution de l'équation sur le contrôle issue de la théorie du contrôle optimal à partir de l'état $x(t)$ des multiplicateurs de Lagrange $\lambda(t)$. Le contrôle maximise à tout instant l'hamiltonien H du problème. Les paramètres de la loi de commande des moteurs comprennent :

- la loi d'orientation de la poussée du moteur, la maximisation de l'hamiltonien H par rapport à l'orientation de poussée obtenue par résolution de l'équation suivante :

$$\frac{\partial H}{\partial u} = \left(\frac{\partial f}{\partial u}\right)^T \lambda + \left(\frac{\partial L}{\partial u}\right)^T = 0$$

- Le paramètre d'allumage du moteur $\delta$, obtenu par la résolution de l'équation suivante :

$$\max_{\delta}\left(H(\delta = 0), H(\delta = 1)\right)$$

$\delta$ représente le booléen déterminant si le moteur est allumé ($\delta = 1$) ou éteint ($\delta = 0$).

Cette étape permet donc d'obtenir la loi d'orientation du vecteur poussée du moteur, ainsi que la loi d'allumage de cette poussée.

On peut noter que le choix des variables d'états et l'utilisation de techniques de filtrage ou de moyennation a un impact direct sur la facilité de représentation et de paramétrisation de ces données à bord du satellite (voir étape C).

En effet il faut pouvoir télécharger et stocker à bord du satellite l'évolution des variables d'état et d'état adjoint du satellite, discrétisées en temps au pas de temps du calculateur sur la durée du cycle de guidage (une semaine par exemple), ce qui représente un téléchargement et un stockage mémoire très important et coûteux pour un satellite. Classiquement on remplace ces tableaux de données par une représentation de paramètres associés ; il suffit alors de ne télécharger et de ne stocker à bord du satellite que ces paramètres (voir étape F).

B) A partir de cette loi d'orientation du vecteur poussée du satellite et des historiques des vecteurs d'état et d'état adjoint du satellite, représentés dans un repère inertiel de référence, on détermine à présent la loi optimale d'évolution de la rotation (= évolution de l'angle de pilotage) du satellite autour du vecteur poussée. Dit autrement, il s'agit d'optimiser l'attitude satellite 3-axes nominale et la loi de pilotage des générateurs solaires sous contraintes opérationnelles (cinématiques, capteurs, thermiques, puissance) sur le cycle de guidage courant. L'optimisation utilise une méthode classique d'optimisation non linéaire sous contraintes, la fonction objectif à minimiser étant l'angle d'aspect solaire moyen sur l'horizon de temps considéré.

C) Pour réduire le volume de données à télécharger et à stocker à bord du satellite, on remplace les tableaux de données issues de l'étape A) par une représentation de paramètres associés.

Typiquement, on remplace les données des variables d'état et celles des variables d'état adjoint, par une représentation polynomiale fonction du temps de ces variables ; il suffit alors de ne stocker que les coefficients du polynôme (quelques dizaines de valeurs en fonction de l'ordre du polynôme), aussi désignés premiers paramètres.

Le paramètre $\lambda_{ex}$ moyenné possède par exemple une représentation polynomiale de la forme

$$\lambda_{ex}(t) = 1532774 * t^6 6 + 18727{,}26 * t^5 - 28021{,}34 * t^4 - 3133{,}043 * t^3 + 792{,}0076 * t^2 - 189{,}1362 * t + 18{,}59838$$

avec un coefficient de corrélation extrêmement proche de 1 : R2 = 0,9999190. Ce polynôme est donc une très bonne approximation de $\lambda_{ex}$ sur toute la durée du trajet. Sept coefficients suffisent à le représenter.

Dans le cas d'une représentation classique sans moyennation préalable un unique polynôme ne permet pas de représenter *p* correctement sur toute la trajectoire car la solution du problème est oscillante ; en pratique, il va falloir décomposer la trajectoire en petits bouts et utiliser une modélisation basée sur un polynôme par oscillation.

D'autre part, la recherche de la distance minimum du paramètre *p* courant par rapport au paramètre *p* nominal est compliquée par le risque de voir apparaître plusieurs minima locaux donc plusieurs solutions.

Selon une alternative, cette étape C) peut être réalisée juste après l'étape A), avant l'étape B).

D) De même que précédemment, pour réduire le volume de données à télécharger et à stocker à bord du satellite, on remplace les données de la loi d'évolution de la rotation issues de B) par :

- une représentation sous forme de table d'échantillonnage,
- une représentation polynomiale comme indiqué dans l'exemple précédent, ou
- une représentation selon un autre format compatible avec les performances souhaitées.

Le format de représentation choisi pour les données de cette loi d'évolution de la rotation est indépendant de celui qui a été choisi pour la représentation des données des variables d'état de la trajectoire de référence, et des variables d'état adjoint. Les données de cette loi d'évolution de la rotation sont par exemple remplacées par les paramètres obtenus par la représentation suivante : une représentation sous forme de table d'échantillonnage avec une résolution temporelle faible, associée à une méthode d'interpolation entre les attitudes correspondant à deux points successifs dans la table. Par exemple, un pas de temps correspondant à une dizaine de points par révolution orbitale est suffisant, ce qui permet de limiter la quantité de données de type 2 dans le plan de guidage.

Ces paramètres sont désignés seconds paramètres.

On peut noter que sélectionner une représentation de l'attitude 3-axes satellite directement sous forme d'angles d'Euler ou bien sous forme de quaternions unitaires (formes utilisées classiquement par le sous-système SCAO à bord), présente les inconvénients suivants : la dynamique de l'attitude satellite étant à plus haute fréquence que le dynamique de l'état satellite, la qualité de l'approximation ou de l'interpolation utilisée à bord est médiocre et introduit des erreurs et des biais qui sont évités en choisissant les autres représentations préconisées.

E) Les premiers et seconds paramètres sont alors concaténés. Ces paramètres concaténés définissent le plan de guidage pour le cycle courant.

F) Celui-ci est alors téléchargé de la station sol vers le satellite et stocké à bord du satellite. Des moyens classiques de réseau de stations sol équipées d'antennes permettent d'établir le lien montant (TC) et le lien descendant (TM) lorsque le satellite est en visibilité de l'une des stations du réseau utilisé pour la mise à poste.

G) Ensuite, de manière classique, une sous-étape g1) permet de reconstruire la consigne de guidage, à bord du satellite en utilisant les paramètres du plan de guidage qui ont été téléchargés ; cette étape est donc réalisée en boucle ouverte, sans correction ou rattrapage pendant le cycle courant. Cette consigne de guidage inclut une consigne d'orientation du vecteur poussée et une consigne d'attitude 3 axes du satellite.

Puis (sous-étape g2) la consigne de guidage est exécutée par un sous-système de contrôle d'attitude et un sous-système de contrôle d'orbite équipant le satellite, incluant un mécanisme de pilotage en boucle fermée autour de la consigne de guidage.

Ces étapes de reconstruction et d'exécution de la consigne de guidage sont réalisées périodiquement pendant la durée du cycle, selon une période prédéfinie (par exemple toutes les minutes) très inférieure à la durée du cycle. Cela permet de provoquer le déplacement du satellite pendant ce cycle. Ce déplacement du satellite est en plus impacté par différentes perturbations externes (exemple pression de radiation solaire, harmonique du potentiel terrestre, attraction lunisolaire,...) ou internes (par exemple les erreurs de réalisation sur la poussée du moteur) qui sont traitées par le contrôle en boucle fermée de la sous-étape g2.

H) Parallèlement au déroulement de ces étapes, c'est-à-dire pendant le cycle courant, la trajectoire orbitale réelle du satellite est mesurée au sol régulièrement, selon une période prédéfinie, par exemple toutes les 4 heures. L'orbite estimée est obtenue par filtrage des mesures acquises au sol (en utilisant un réseau de stations sol) avec un modèle de propagation d'orbite permettant d'intégrer la poussée faible ainsi que d'autres modèles de forces de perturbation naturelles (comme l'effet de l'aplatissement de la Terre) sur un arc orbital donné. Le filtre peut être séquentiel (moindres carrés) ou bien récursif (filtre de Kalman).

I) Lorsque ce cycle courant est terminé, les étapes précédentes sont réitérées périodiquement de cycle en cycle, en prenant comme orbite de départ l'orbite réelle mesurée au sol en fin de cycle précédent, et ce jusqu'à achèvement du transfert orbital c'est-à-dire jusqu'à l'arrivée sur la cible orbitale avec la précision souhaitée pour la mission de mise à poste.

La solution selon l'invention permet de découper le problème global de génération de trajectoire et d'attitude par un découpage en deux sous-problèmes plus simples (génération de trajectoire et génération d'attitude) traités séquentiellement, en utilisant une approche indirecte pour la génération de trajectoire et une approche par optimisation non linéaire pour la génération d'attitude.

Résoudre le problème globalement en une seule étape, par exemple par une méthode d'optimisation non linéaire sous contraintes, conduit à un grand nombre de variables de décision, qui engendre des problèmes de convergence et de temps de réponse trop longs.

Résoudre le problème par un découpage en deux sous-problèmes plus simples traités séquentiellement mais en utilisant une approche non indirecte pour la génération de trajectoire ne permet pas de bénéficier de la représentation liée à la théorie du contrôle optimal utilisant l'état adjoint du satellite ; les autres approches sont spécifiques et/ou sous-optimales et/ou introduisent des erreurs dans la représentation à bord.

De même, résoudre le problème par un découpage en deux sous-problèmes plus simples traités séquentiellement mais en utilisant une approche autre que l'optimisation non linéaire pour la génération d'attitude fournit une solution faisable sur le plan de la satisfaction des contraintes d'attitude, mais une solution non optimisée.

Le procédé selon l'invention se distingue de la demande de brevet FR 2998875 (ou '875) sur les points suivants.

❖ Partage des tâches bord-sol :

Le procédé de mise à poste de '875 présuppose que l'on dispose à bord d'un « Module de détermination d'état (par exemple avec un GPS) » qui retourne l'état mesuré en temps réel à bord.

Le procédé selon l'invention permet de se dispenser d'un tel module, et la mesure de l'état réel (acquisition et traitement) se fait au sol à partir de mesures classiques (distance, angulaire, Doppler) en utilisant un « Module de détermination d'état au sol ». En conséquence le procédé selon l'invention ne nécessite aucun mécanisme bord de recalage des multiplicateurs de Lagrange, qui sert au calcul bord de la commande.

❖ Horizon de guidage et degré d'autonomie :

Le procédé de mise à poste de '875 présuppose que l'on planifie au sol la trajectoire de guidance sur toute la durée du transfert orbital (typiquement 3 à 6 mois), avant le début du transfert à poussée faible. Pendant le transfert orbital, ce procédé permet alors de se ramener à la trajectoire de référence en boucle fermée. Le procédé de mise à poste de '875 s'applique à l'ensemble du transfert orbital sans itération sol, mais cela nécessite le développement d'un « module de détermination d'état » supplémentaire à bord.

Le procédé selon l'invention remplace le développement d'un tel module par un recalage sol à basse fréquence, et une ré-optimisation de la trajectoire de guidage en tenant compte de l'effet des erreurs cumulées sur l'orbite dues à des perturbations non modélisées. Un point essentiel est que le processus de ré-optimisation de la trajectoire de guidage est identique à celui de l'optimisation initiale, utilisant les mêmes moyens et outils sol (pas de développement supplémentaire).

❖ Contenu et quantité d'informations dans le plan de guidage à télécharger au satellite :

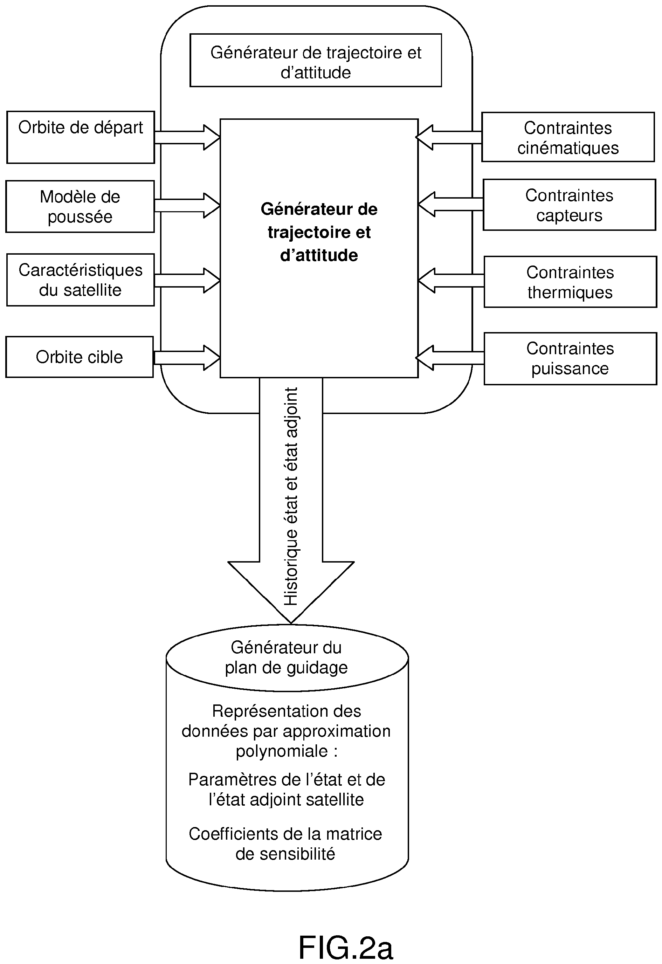

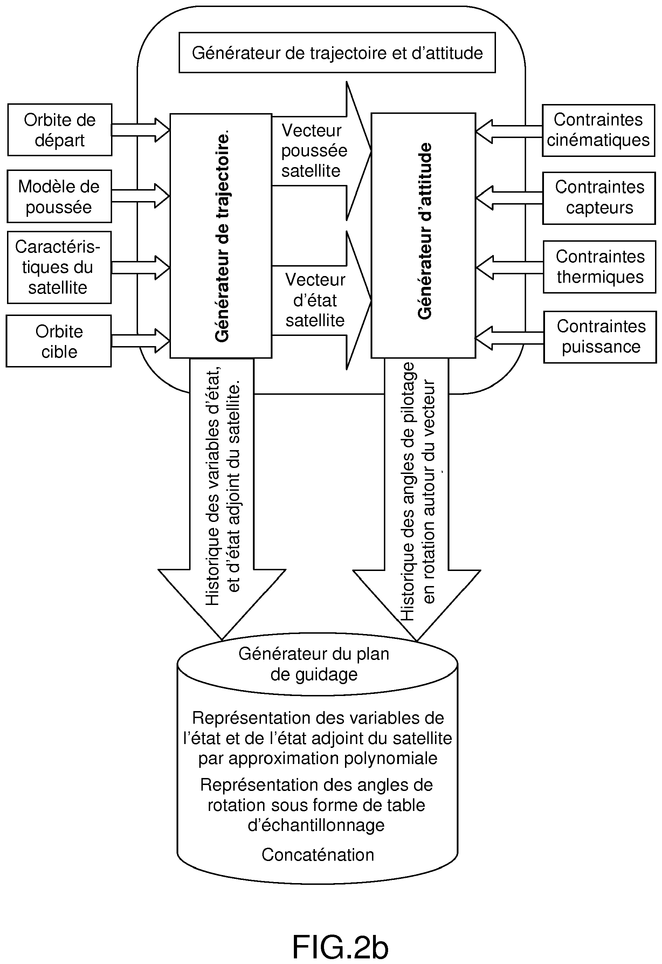

Comme on peut le voir sur les figures 2, le procédé de mise à poste de '875 nécessite la fourniture de la représentation polynomiale de la loi d'évolution des multiplicateurs de Lagrange (paramètres d'état adjoint) sur un horizon de temps égal à la durée du transfert orbital (typiquement 3 à 6 mois). En outre, la donnée d'une matrice de sensibilité est également nécessaire : loi d'évolution des coefficients de la matrice sur un horizon de temps égal à la durée du transfert orbital.

Le procédé selon l'invention ne nécessite la fourniture de la représentation polynomiale de la loi d'évolution des multiplicateurs de Lagrange (paramètres d'état adjoint) ainsi que celle de la représentation polynomiale de la loi d'évolution des variables d'état (par exemple, les éléments orbitaux équinoxiaux), que sur un horizon de temps égal à la durée d'un cycle de guidage (par exemple 7 jours).

❖ Reconstruction à bord de la seule orientation désirée du vecteur poussée / reconstruction à bord de l'attitude 3-axes satellite complète :

Comme on peut le voir sur les figures 2, le procédé de mise à poste de '875 permet de reconstruire à bord la loi d'orientation du vecteur poussée et optionnellement la loi de commandes de mise « on » et de mise « off » des tuyères à poussée faible utilisées pour le transfert orbital.

Le procédé selon l'invention permet également de reconstruire l'attitude 3-axes satellite (par exemple représentée par un quaternion de norme unité). Pour cela, on doit rajouter les composantes suivantes au système de guidage :

- Un « Module d'optimisation d'attitude 3-axes d'état sous contraintes opérationnelles » activé au sol,
- Des données supplémentaires dans le plan de guidage à télécharger à bord du satellite, permettant de modéliser et de représenter la loi en rotation angulaire autour du vecteur poussée.
- Une généralisation de la fonction de recalcul bord de la commande satellite à partir des données du plan de guidage pour retourner la consigne d'attitude 3-axes satellite instantanée bord pour exécution par le système de contrôle d'attitude.

Le procédé de guidage selon l'invention peut s'implémenter à partir d'un satellite comportant au moins un moteur et un sous-système de contrôle d'attitude, et qui comporte des moyens de mise en oeuvre du procédé de guidage présenté ci-dessus en relation avec des moyens d'une ou plusieurs stations sol.

Le procédé de guidage peut par exemple être mis en oeuvre sur un processeur générique, un processeur dédié, un réseau de portes programmables connu aussi sous le nom anglais de FPGA pour Field Programmable Gate Array.

Ce procédé de guidage peut aussi s'implémenter à partir d'un produit programme d'ordinateur, ce programme d'ordinateur comprenant des instructions de code permettant d'effectuer les étapes du procédé de guidage. Il est enregistré sur un support lisible par ordinateur. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

## Revendications

1. Procédé de guidage pour la mise à poste d'un satellite équipé de moyens de communication avec une station sol, comportant les étapes suivantes réalisées pendant un cycle courant prédéfini :

     A) déterminer au sol pour un cycle prédéterminé, une loi d'orientation du vecteur poussée du satellite, et un historique de variables d'état et de variables d'état adjoint du satellite pour le transfert d'une orbite de départ vers une orbite cible prédéterminée en utilisant la théorie du contrôle optimal,
     B) à partir de la loi d'orientation du vecteur poussée du satellite, et de l'historique de variables d'état et de variables d'état adjoint du satellite représentés dans un repère inertiel de référence, déterminer au sol pour ladite période de cycle, une loi d'évolution de la rotation du satellite autour du vecteur poussée,
     C) représenter selon un format prédéterminé l'évolution des variables d'état et d'état adjoint pour obtenir des premiers paramètres,
     D) représenter selon un format prédéterminé une loi d'évolution de la rotation pour obtenir des seconds paramètres,
     E) concaténer les premiers et seconds paramètres pour obtenir un plan de guidage du satellite,
     F) télécharger à bord du satellite le plan de guidage du satellite,
     G) pendant le cycle courant, itérer périodiquement les sous-étapes suivantes selon une période prédéfinie inférieure à la durée du cycle de guidage :

          - g1) reconstruire à bord du satellite une consigne de guidage du satellite,
          - g2) exécuter à bord du satellite la consigne de guidage en appliquant une boucle fermée de contrôle,

     H) mesurer au sol la trajectoire orbitale réelle du satellite,

I) réitérer les étapes A) à H) périodiquement de cycle en cycle, avec la trajectoire mesurée en fin de cycle précédent comme orbite de départ du cycle suivant, jusqu'à atteindre l'orbite cible.

**2.** Procédé selon la revendication précédente, **caractérisé en ce que** l'orbite cible est une orbite opérationnelle.

**3.** Procédé selon l'une des revendications précédentes, **caractérisé en ce que** l'orbite de départ est une orbite d'injection.

**4.** Procédé selon l'une des revendications précédentes, **caractérisé en ce que** l'évolution des variables d'état et d'état adjoint est représentée en utilisant une représentation polynomiale.

**5.** Procédé selon l'une des revendications précédentes, **caractérisé en ce que** la loi d'évolution de la rotation est représentée sous forme de table d'échantillonnage.

**6.** Procédé selon la revendication précédente, **caractérisé en ce que** le cycle courant est d'une semaine.

**7.** Un produit programme d'ordinateur, ledit programme d'ordinateur comprenant des instructions de code permettant d'effectuer les étapes du procédé selon l'une quelconque des revendications 1 à 6, lorsque ledit programme est exécuté sur un ordinateur.

**Patentansprüche**

**1.** Leitverfahren zum Stationieren eines mit Mitteln zum Kommunizieren mit einer Bodenstation ausgestatteten Satelliten, das die folgenden Schritte beinhaltet, die während eines vordefinierten laufenden Zyklus ausgeführt werden:

A. Bestimmen, am Boden für einen vorbestimmten Zyklus, eines Gesetzes zum Orientieren des Schubvektors des Satelliten und einer Historie von Zustandsvariablen und adjungierten Zustandsvariablen des Satelliten zum Verlegen eines Ausgangsorbits auf einen vorbestimmten Zielorbit durch Nutzen der Theorie der optimalen Steuerung;
B. Bestimmen, am Boden für den vorbestimmten Zyklus, eines Gesetzes zum Entwickeln der Rotation des Satelliten um den Schubvektor auf der Basis des Gesetzes zum Orientieren des Schubvektors des Satelliten und der Historie von Zustandsvariablen und adjungierten Zustandsvariablen des Satelliten, dargestellt in einem Trägheits-Referenzbezugssystem;
C. Darstellen, gemäß einem vorbestimmten Format, der Entwicklung der Zustands- und adjungierten Zustandsvariablen, um erste Parameter zu erhalten;
D. Darstellen, in einem vorbestimmten Format, eines Gesetzes zum Entwickeln der Rotation, um zweite Parameter zu erhalten;
E. Verketten der ersten und zweiten Parameter, um einen Plan zum Leiten des Satelliten zu erhalten;
F. Herunterladen des Plans zum Leiten des Satelliten auf den Satelliten;
G. periodisches Wiederholen der folgenden Teilschritte während des laufenden Zyklus gemäß einer vordefinierten Periode, die kürzer ist als die Dauer des Leitzyklus;

- g1) Rekonstruieren eines Satellitenleitsollwertes an Bord des Satelliten;
- g2) Ausführen des Leitsollwertes an Bord des Satelliten durch Anwenden eines geschlossenen Regelkreises;

H. Messen der tatsächlichen Umlaufbahn des Satelliten am Boden;
I. periodisches Wiederholen der Schritte A) bis H) Zyklus für Zyklus mit der am Ende des vorherigen Zyklus gemessenen Bahn als Anfangsorbit für den nächsten Zyklus, bis der Zielorbit erreicht ist.

**2.** Verfahren nach dem vorherigen Anspruch, **dadurch gekennzeichnet, dass** der Zielorbit ein operationeller Orbit ist.

**3.** Verfahren nach einem der vorherigen Ansprüche, **dadurch gekennzeichnet, dass** der Ausgangsorbit ein Einschussorbit ist.

**4.** Verfahren nach einem der vorherigen Ansprüche, **dadurch gekennzeichnet, dass** die Entwicklung der Zustands- und adjungierten Zustandsvariablen mittels einer Polynomdarstellung dargestellt wird.

**5.** Verfahren nach einem der vorherigen Ansprüche, **dadurch gekennzeichnet, dass** das Gesetz zum Entwickeln der Rotation in Form einer Abtasttabelle dargestellt wird.

**6.** Verfahren nach dem vorherigen Anspruch, **dadurch gekennzeichnet, dass** der laufende Zyklus eine Woche ist.

**7.** Computerprogrammprodukt, wobei das Computerprogramm Code-Befehle umfasst, die es zulassen, beim Abarbeiten des Programms auf einem Computer die Schritte des Verfahrens nach einem der Ansprüche 1 bis 6 auszuführen.

**Claims**

**1.** A guiding method for positioning a satellite equipped with means for communicating with a ground station, comprising the following steps carried out during a predefined running cycle:

A. determining, on the ground for a predetermined cycle, a rule for orienting the thrust vector of said satellite and a log of state variables and of assistant state variables of said satellite for transferring from an initial orbit to a predetermined target orbit using the optimal control theory;
B. determining, on the ground for said predetermined cycle and on the basis of the rule for orienting the thrust vector of said satellite and of the log of state variables and of assistant state variables of said satellite shown in a reference inertial coordinate system, a rule for changing the rotation of said satellite around said thrust vector;
C. representing, according to a predetermined format, the change of the state and assistant state variables in order to obtain first parameters;
D. representing, according to a predetermined format, a rule for changing the rotation in order to obtain second parameters;
E. concatenating said first and second parameters in order to obtain a plan for guiding said satellite;
F. downloading said plan for guiding said satellite onto said satellite;
G. periodically repeating the following sub-steps during the running cycle according to a predefined period that is shorter than the duration of said guiding cycle;

- g1) reconstructing a satellite guiding setpoint on board said satellite;
- g2) executing said guiding setpoint on board said satellite by applying a closed control loop;

H. measuring the actual orbital trajectory of said satellite on the ground;
I. regularly repeating steps A) to H) on a cycle-by-cycle basis, with the trajectory measured at the end of the preceding cycle as the initial orbit for the next cycle, until the target orbit is reached.

**2.** The method according to the preceding claim, **characterised in that** said target orbit is an operational orbit.

**3.** The method according to any one of the preceding claims, **characterised in that** said initial orbit is an injection orbit.

**4.** The method according to any one of the preceding claims, **characterised in that** the change of the state and assistant state variables is shown using a polynomial representation.

**5.** The method according to any one of the preceding claims, **characterised in that** the rule for changing the rotation is shown in the form of a sampling table.

**6.** The method according to the preceding claim, **characterised in that** said running cycle is one week.

**7.** A computer program product, said computer program comprising code instructions allowing the steps of the method according to any one of claims 1 to 6 to be carried out when said program is executed on a computer.

EP 3 034 411 B1

A
- Optimisation loi d'orientation du vecteur poussée,
- Historique variables d'état,
- Historique variables d'état adjoint

C
Représentation→ premiers paramètres

B
Optimisation loi d'évolution de la rotation

D
Représentation→ seconds paramètres

E
Concaténation des paramètres → plan de guidage

Téléchargement à bord du satellite

F

H
Mesure trajectoire réelle

g1
Reconstruction consigne de guidage

g2
Exécution consigne de guidage

FIG.1

FIG.2a

**Générateur de trajectoire et d'attitude**

Orbite de départ → Générateur de trajectoire. → Vecteur poussée satellite → Générateur d'attitude ← Contraintes cinématiques

Modèle de poussée → ← Contraintes capteurs

Caractéristiques du satellite → Vecteur d'état satellite → ← Contraintes thermiques

Orbite cible → ← Contraintes puissance

Historique des variables d'état, et d'état adjoint du satellite.

Historique des angles de pilotage en rotation autour du vecteur

**Générateur du plan de guidage**

Représentation des variables de l'état et de l'état adjoint du satellite par approximation polynomiale

Représentation des angles de rotation sous forme de table d'échantillonnage

Concaténation

# FIG.2b

**EP 3 034 411 B1**

## RÉFÉRENCES CITÉES DANS LA DESCRIPTION

**Documents brevets cités dans la description**

- FR 2998875